# EUROPÄISCHE PATENTANMELDUNG

(11) **EP 4 422 041 A1**
(43) Veröffentlichungstag der Anmeldung: **28.08.2024**
(21) Anmeldenummer: 24158867.2
(22) Anmeldetag: 21.02.2024
(51) Int. Cl.: H02K 15/095, H01F 41/09, H02K 1/14, H02K 15/085

(54) **WICKELVORRICHTUNG UND ZUGEHÖRIGES HERSTELLUNGSVERFAHREN EINER BAUGRUPPE FÜR EINE ELEKTRISCHE MASCHINE**

(30) Priorität: 22.02.2023 DE 102023104359
(71) Anmelder: Aumann Espelkamp GmbH, 32339 Espelkamp (DE)
(72) Erfinder: Hagedorn, Jürgen, 32312 Lübbecke (DE)
(74) Vertreter: Bittner, Thomas L.

(57) **Zusammenfassung**

Eine Wickelvorrichtung (1) zum Herstellen einer Anordnung mit mehreren Wicklungsträgern (111, 112, 113) und darauf angeordneten Wicklung aus Drahtmaterial (2) umfasst ein Wickelwerkzeug (3). Jeder Wicklungsträger (111, 112, 113) trägt eine Teilwicklung (121, 122, 123). Das Wickelwerkzeug (3) umfasst eine um eine erste Drehachse (S) drehbare Basis (31), eine Aufnahmeeinrichtung (35) mit einer die Wicklungsträger (111, 112, 113) haltenden Trageinheit (101) und einen zur ersten Drehachse (S) radial versetzten Ausleger (33), der mit der Basis (31) verbunden und an dem die Aufnahmeeinrichtung (35) um eine zweite Drehachse (T) drehbar gelagert ist. Die zweite Drehachse (T) ist quer zu der ersten Drehachse (S) ausgerichtet . Eine dem Wickelwerkzeug (3) zugeordnete Antriebseinrichtung (5) ist eingerichtet, um drehende Antriebsbewegung bereitzustellen. Eine Kupplungseinrichtung (7) dient zum Übertragen der drehenden Antriebsbewegung der Antriebseinrichtung (5) auf das Wickelwerkzeug (3), entweder die Aufnahmeeinrichtung (35) rotiert um die erste Drehachse (S) oder die zweite Drehachse (T).

## Beschreibung

Die Erfindung betrifft eine Wickelvorrichtung und ein Verfahren zum Herstellen einer Anordnung für eine elektrische Maschine mit mehreren Wicklungsträgern und einer hierauf angeordneten Wicklung. Die Erfindung betrifft insbesondere eine Vorrichtung und ein Verfahren zum Bewickeln von Polketten oder außen genuteten Statoren oder Rotoren.

### Hintergrund

Zahnketten können in einer Wickelvorrichtung bewickelt werden, indem die Einzelzähne zum Bilden einer Polkette unter mit einem Winkelversatz benachbart zu einander an einer Zahnkettenaufnahme befestigt sind und nacheinander bewickelt werden. Um einen bestimmten Zahn mit der in eine Wickelposition zu bringen, kann ein servomotorisches Schaltwerk verwendet werden. Das Schaltwerk befindet sich unter der Wickelvorrichtung. Es wird angehoben, um die Zahnkettenaufnahme zunächst zu ergreifen, einen bewickelten Zahn aus der Wickelposition zu entfernen und dann einen anderen Zahn in die Wickelposition zu bringen. Anschließend kann wieder die Wickelvorrichtung verwendet werden, um den anderen Zahn zu bewickeln. Der für die Verwendung derartiger Schaltwerke erforderliche Investitionsaufwand, der Wartungsaufwand und die zur Verwendung des Schaltwerks erforderliche Prozesszeit sind groß.

DE 10 2010 026 527 A1 und DE 10 2011 011 809 A1 beschreiben Vorrichtungen und Verfahren zum Aufbringen eines Wickeldrahtes.

### Zusammenfassung

Aufgabe der Erfindung ist es, verbesserte Technologien für das Herstellen von Spulenwicklungen für eine Zahnkette, welche einen außengenuteten Stator, Rotor oder einen Teil eines außengenuteten Stators oder Rotors bildet oder auch Einzelzähne für einen innengenuteten Stator oder Rotor, bereitzustellen, mit denen insbesondere ein effektives und effizientes Wickeln ermöglicht ist.

Zur Lösung der Aufgabe ist eine Wickelvorrichtung zum Herstellen einer Anordnung für eine elektrische Maschine vorgesehen. Solche Anordnungen weisen mehrere Wicklungsträgern und eine hierauf angeordneten Wicklung aus Drahtmaterial auf. Ein Wicklungsträger kann insbesondere durch ein, vorzugsweise elektrisch isoliertes, Zahnsegment realisiert sein. Die Wicklungsträger können an einer Trageinheit, insbesondere einer Zahnkettenaufnahme, befestigt sein. Die Wicklung setzt sich aus Teilwicklungen zusammen. Den mehreren Wicklungsträgern ist eine jeweilige Teilwicklung zugeordnet.

Die Wickelvorrichtung umfasst ein Wickelwerkzeug und eine dem Wickelwerkzeug zugeordnete Antriebseinrichtung. Die Wickelvorrichtung gemäß der vorliegenden Offenbarung umfasst ferner eine Kupplungseinrichtung. Das Wickelwerkzeug weist eine Basis, einen Ausleger und eine Aufnahmeeinrichtung auf. Die Basis ist um eine erste Drehachse drehbar, die auch als Spindelachse bezeichnet sein kann. Bevorzugt ist die Spindelachse horizontal ausgerichtet. Die Aufnahmeeinrichtung ist dazu eingerichtet, die Trageinheit mit den mehreren Wicklungsträgern zu halten. Die Trageinheit kann sternförmig sein und in Umfangsrichtung der Trageinheit zu einander benachbarte Wicklungsträger aufweisen. Der Ausleger ist zumindest teilweise zu der ersten Drehachse radial versetzt und mit der Basis verbunden. An dem Ausleger ist die Aufnahmeeinrichtung um eine zweite Drehachse drehbar gelagert. Die zweite Drehachse kann auch als Wechselachse oder Trommelachse bezeichnet sein. Die zweite Drehachse ist quer, vorzugsweise senkrecht, zu der ersten Drehachse ausgerichtet. Zum Wechseln kann die Drehachse vertikal ausgerichtet sein. Vorzugweise ist die Trageinheit um die Trommelachse drehbar und fest mit der Aufnahmeeinrichtung verbunden oder verbindbar. Es kann bevorzugt sein, dass die Aufnahmeeinrichtung dazu eingerichtet ist, die Trageinheit derart zu halten, dass dessen Mittel- und/oder Symmetrieachse vorzugsweise kontinuierlich koaxial zu der zweiten Drehachse ausgerichtet ist. Die Antriebseinrichtung ist dazu eingerichtet, eine drehende Antriebsbewegung bereitzustellen. Bevorzugt ist die Antriebseinrichtung durch eine Wickelspindel realisiert. Die Kupplungseinrichtung dazu eingerichtet, die der drehenden Antriebsbewegung von der Antriebseinrichtung an das Wickelwerkzeug zu übertragen, um die Aufnahmeeinrichtung um die erste Drehachse oder die zweite Drehachse zu Rotieren. Der Einsatz einer Kupplungseinrichtung, welche die Antriebsbewegung von ein und derselben Antriebseinrichtung zum Drehen der Aufnahme mit daran befestigter oder befestigbarer Trageinheit selektiv um die erste oder die zweite Drehachse überträgt, erlaubt es, auf ein servomotorisches Schaltwerk zu verzichten. Dadurch können die Investitionskosten für das servomotorische Schaltwerk eingespart werden. Ferner hat sich gezeigt, dass sich mit einer solchen Wickelvorrichtung schnellere Bewicklungszyklen realisieren lassen.

Gemäß einer Ausführungsform ist die Kupplungseinrichtung dazu ausgelegt, eine erste Stellung (Wickelstellung) zum Übertragen der drehenden Antriebsbewegung von der Antriebseinrichtung an das Wickelwerkzeug zum Rotieren der Aufnahmeeinrichtung um die erste Drehachse oder eine zweite Stellung (Wechselstellung) zum Übertragen der drehenden Antriebsbewegung von der Antriebseinrichtung an das Wickelwerkzeug zum Rotieren der Aufnahmeeinrichtung um die zweite Drehachse einzunehmen. Es kann vorgesehen sein, dass die Kupplungseinrichtung in der Wickelstellung eine erste drehfeste Verbindung zwischen der Antriebseinrichtung und dem Wickelwerkzeug ausbildet und in der Wechselstellung eine zweite drehfeste Verbindung zwischen der Antriebseinrichtung und dem Wickelwerkzeug, die sich von der ersten unterscheidet.

Die Kupplungseinrichtung kann ein, vorzugsweise translatorisch, bewegliches, insbesondere längs der Spindelachse verlagerbares, Verlagerungsbauteil aufweisen, wie eine Schiebehülse. Die Schiebehülse kann beispielsweise zylinderhülsenförmig sein die Basis ringförmig, vorzugsweise koaxial zur Spindelachse, umgeben. Das Verlagerungsbauteil verbindet die Basis in der ersten Stellung, d.h. der Wickelstellung, drehfest mit der Antriebseinrichtung. In der zweiten Stellung, d.h. der Wechselstellung, hält das Verlagerungsbauteil die Basis ortsfest an einem Stopper.

In bevorzugten Ausführungsformen kann vorgesehen sein, dass die Kupplungseinrichtung ein Übertragungsmittel zum Übermitteln der drehenden Antriebsbewegung von der Antriebseinrichtung an die Aufnahmeeinrichtung aufweist, insbesondere zum Übermitteln der drehenden Antriebsbewegung an die Aufnahmeeinrichtung, wenn die Kupplungseinrichtung sich in der Wechselstellung befindet. Vorzugsweise ist in der Wechselstellung die Basis von der Antriebseinrichtung gelöst. In der Wickelstellung kann zumindest eines der Übertragungsmittel drehfest mit der Basis verbunden sein. In der Wechselstellung kann die Basis auch von den Übertragungsmitteln gelöst sein, beispielsweise mittels einer zwischen Basis und Übertragungsmitteln bereitgestellten Drehlagerung, wie einem Kugellager, welches es den Übertragungsmitteln zumindest teilweise gestattet, bei feststehender Basis eine durch die Antriebseinheit bewirkte Rotationsbewegung um die Spindelachse zu vollführen. In besonders bevorzugten Ausführungsformen sind die Übertragungsmittel innerhalb des Wickelwerkzeugs, insbesondere in der Basis und/oder in dem Ausleger, untergebracht.

Die Übertragungsmittel können ein Verlagerungsmittel, wie eine Kardanwelle, zum Verlagern der drehenden Antriebsbewegung fort von der ersten Drehachse aufweisen. Das Verlagerungsmittel weist vorzugsweise eine koaxial zur Spindelachse ausgerichtete Antriebsachse zum Empfangen der drehenden Antriebsbewegung und eine radial, insbesondere parallel, zur Antriebsachse versetzte Abtriebsachse zum Abgeben der drehenden Antriebsbewegung auf.

Alternativ kann die Abtriebsachse schräg zu der Antriebsachse angewinkelt (relativ zur Projektion der Spindelachse geneigt) und radial versetzt ausgerichtet sein. Durch eine solche Ausgestaltung ist der Wickelraum noch einfacher zugänglich. Das Verlagerungsmittel kann ferner eine Zwischenachse aufweisen, die die Antriebsachse mit der Abtriebsachse verbindet. Alternativ oder zusätzlich können die Übertragungsmittel ein, insbesondere selbsthemmendes, Umlenkmittel, wie ein Schneckengetriebe, zum Umlenken der drehenden Antriebsbewegung um einen Umlenkwinkel aufweisen. Das Umlenkmittel kann beispielsweise dazu eingerichtet sein, die drehende Antriebsbewegung um die Spindelachse oder eine zur Spindelachse versetzte Abtriebsachse in eine drehende Antriebsbewegung um die quer, vorzugsweise senkrecht, zur Spindelachse ausgerichtete Trommelachse umzulenken.

Optional kann die Wickelvorrichtung ferner einen, insbesondere pneumatischen, Aktor aufweisen, der dazu ausgelegt ist, die Kupplungseinrichtung zu Betätigen. Der Aktor kann durch eine Indexschaltung realisiert sein. Vorzugweise ist der Aktor dazu eingerichtet, die Kupplungseinrichtung aus der Wechselstellung in die Wickelstellung oder aus der Wickelstellung in die Wechselstellung zu drängen. Der Aktor kann eine Federrückstellung aufweisen. Der Aktor kann vorzugsweise mit einem Kolbenelement verbunden sein, dass mit dem Verlagerungsbauteil gekoppelt ist.

Gemäß einem Aspekt ist die Aufnahmeeinrichtung gemeinsam mit der Trageinheit mit einem vorbestimmten, korrespondierend zu der ersten Drehachse ausgerichteten Wicklungsträger um die erste Drehachse drehbar.

Es kann bevorzugt sein, dass das die Trageinheit an der Aufnahmeeinrichtung um die zweite Drehachse drehbar ist, um einen beliebigen der Wicklungsträger korrespondierend zu der ersten Drehachse auszurichten.

Die Trageinheit ist bevorzugt ausgewählt ist aus der folgenden Gruppe: außen genuteter Kern eines Stators, außen genuteter Kern eines Rotors, Trageinheit mit Polzähnen einer Polkette und Trageinheit mit einer Sternanordnung von Trägerelementen.

Die Erfindung betrifft auch ein Verfahren zum Herstellen einer Anordnung für eine elektrische Maschine mit einer Trageinheit mit mehreren Wicklungsträgern und einer hierauf angeordneten Wicklung aus Drahtmaterial, wobei den mehreren Wicklungsträgern eine jeweilige Teilwicklung zugeordnet ist.

Bei dem Verfahren erfolgt, vorzugsweise initial, ein Bereitstellen einer Wickelvorrichtung mit einem Wickelwerkzeug, welches eingerichtet ist, eine Trageinheit aufzunehmen, und einer dem Wickelwerkzeug zugeordneten Antriebseinrichtung, welche eingerichtet ist, eine drehende Antriebsbewegung bereitzustellen.

Das Verfahren umfasst das Anordnen einer Trageinheit mit mehreren Wicklungsträgern an dem Wickelwerkzeug. Bei dem Verfahren wird, vorzugsweise zunächst, ein erster Wicklungsträger in einer Wickelstellung korrespondierend zu einer ersten Drehachse angeordnet. Die so an dem Wickelwerkzeug gehaltene Trageinheit mit dem ausgerichteten ersten Trägerkörer, werden angetrieben durch die drehende Antriebsbewegung, um die, vorzugsweise horizontale erste Drehachse rotiert, um eine erste Teilwicklung auf dem ersten Wicklungsträger herzustellen. Sodann, insbesondere nach dem Herstellen der ersten Teilwicklung, erfolgt ein Rotieren der an dem Wickelwerkzeug gehaltenen Trageinheit, angetrieben durch die drehende Antriebsbewegung, um eine, vorzugsweise vertikale, zweite Drehachse, um anstelle des ersten Wicklungsträgers einen zweiten Wicklungsträger in einer Wickelstellung korrespondierend zu der ersten Drehachse anzuordnen (Wechseln). Beim Rotieren der Trageinheit um die zweite Drehachse wird der erste Wicklungsträger aus der Wickelstellung heraus bewegt. Nach dem Wechseln wird die an dem Wickelwerkzeug gehaltene Trageinheit, angetrieben durch die drehende Antriebsbewegung, um die erste Drehachse rotiert, um eine zweite Teilwicklung auf dem zweiten Wicklungsträger herzustellen. Abschließend erfolgt ein Lösen der Trageinheit von dem Wickelwerkzeug. Die Wicklung für die Anordnung ist dann gebildet. Indem dieselbe drehende Antriebsbewegung sowohl zum Rotieren um die erste Drehachse als auch zum Rotieren um die zweite Drehachse genutzt wird, kann auf ein zusätzliche servomotorisch betriebene Maschine verzichtet werden. Dadurch werden die Servomotorikkomponenten obsolet, deren Anschaffung und Wartung kostenintensiv ist. Überraschenderweise lassen sich dadurch auch kürzere Herstellungszyklen erreichen.

Das Verfahren gemäß der vorliegenden Offenbarung wird vorzugsweise unter Verwendung der Wickelvorrichtung gemäß der vorliegenden Offenbarung durchgeführt. Insbesondere ist die Wickelvorrichtung gemäß der vorliegenden Offenbarung dazu ausgelegt und eingerichtet, das Verfahren gemäß der vorliegenden Offenbarung durchzuführen.

Bei bevorzugten Ausführungen erfolgt zudem ein Rotieren der an dem Wickelwerkzeug gehaltenen Trageinheit, angetrieben durch die drehende Antriebsbewegung, um eine zweite Drehachse, um anstelle des zweiten Wicklungsträgers einen dritten Wicklungsträger in einer Wickelstellung korrespondierend zu der ersten Drehachse anzuordnen. Bei diesem Rotieren wird vorzugsweise der zweite Wicklungsträgers aus der Wickelstellung heraus verlagert. Sodann wird die an dem Wickelwerkzeug gehaltene Trageinheit, ebenfalls angetrieben durch die drehende Antriebsbewegung, um die erste Drehachse rotiert, um eine dritte Teilwicklung auf dem dritten Wicklungsträger herzustellen. Diese auf den zweiten und dritten Wicklungsträger bezogenen Rotationsvorgänge werden vorzugsweise vor dem Lösen der Trageinheit von dem Wickelwerkzeug durchgeführt. Falls in dem Verfahren eine Trageinheit mit weiteren Wicklungsträgern behandelt wird, die mit weiteren Teilwicklungen belegt werden sollen, kann dies entsprechend oft wiederholt werden. Optional kann das Rotieren mit weiteren Bewegungen in axialer und oder radialer Richtung relativ zur Trommel- und/oder Schwenkachse überlagert werden. Alternativ oder zusätzlich kann zumindest teilweise ein Rotieren in verschiedenen Drehrichtungen erfolgen. Dies kann beispielsweise vorgesehen sein, um Verbindungsdrahtlängen zwischen Zahnsegmenten einzustellen, oder um beim Herstellen von lösbar an der Trageinheit gehaltenen Einzelzähnen um unterschiedliche Verbindungsdrahtlängen zwischen benachbarten Zahnsegmenten zu erzeugen.

Bei bevorzugten Ausführungen kann vorgesehen sein, dass zum Rotieren der Trageinheit um die erst Drehachse eine erste drehfeste Verbindung zwischen dem Wickelwerkzeug und der Antriebseinrichtung ausgebildet wird, wobei vorzugweise derweil die nachfolgend beschriebene zweite drehfeste Verbindung gelöst wird, und dass zum Rotieren der Trageinheit um die zweite Drehachse eine zweite drehfeste Verbindung zwischen dem Wickelwerkzeug und der Antriebseinrichtung ausgebildet wird, wobei vorzugweise währenddessen die erste drehfeste Verbindung gelöst wird. Zum Ausbilden der ersten oder zweiten drehfesten Verbindung wird vorzugsweise eine Kupplungseinrichtung, insbesondere wie oben beschrieben, verwendet. Insbesondere kann dabei zum Ausbilden und zum Lösen der ersten drehfesten Verbindung ein bewegliches, insbesondere längs der Spindelachse verlagerbares, Verlagerungsbauteil, wie eine Schiebehülse, betätigt werden. Es kann besonders bevorzugt sein, dass die Kupplungseinrichtung dazu ausgelegt ist, die drehende Antriebsbewegung zum Rotieren der Trageinheit um die zweite Drehachse fort von der ersten Drehachse zu verlagern und/oder quer, insbesondere senkrecht, zu der ersten Drehachse umzulenken.

Vorzugweise wird bei dem Verfahren als Trageinheit eine Trageinheit aus der folgenden Gruppe ausgewählt und an dem Wickelwerkzeug angeordnet: außen genuteter Kern eines Stators, außen genuteter Kern eines Rotors, Trageinheit mit Polzähnen einer Polkette und Trageinheit mit einer Sternanordnung von Wicklungsträgern.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Seitenansicht einer Wickelvorrichtung im Teilschnitt, wobei ein Wickelwerkzeug um eine erste Drehachse drehbar ist;
- Fig. 2: eine schematische Frontansicht der Wickelvorrichtung aus Fig. 1;
- Fig. 3: eine andere schematische Ansicht der Wickelvorrichtung aus Fig. 1;
- Fig. 4: eine schematische Seitenansicht der Wickelvorrichtung aus Fig. 1, wobei das Wickelwerkzeug um eine zweite Drehachse drehbar ist;
- Fig. 5: eine andere schematische Ansicht der Wickelvorrichtung aus Fig. 4;
- Fig. 6: eine schematische Frontansicht der Wickelvorrichtung aus Fig. 4; und
- Fig. 7: eine schematische Schnittansicht einer alternativen Wickelvorrichtung.

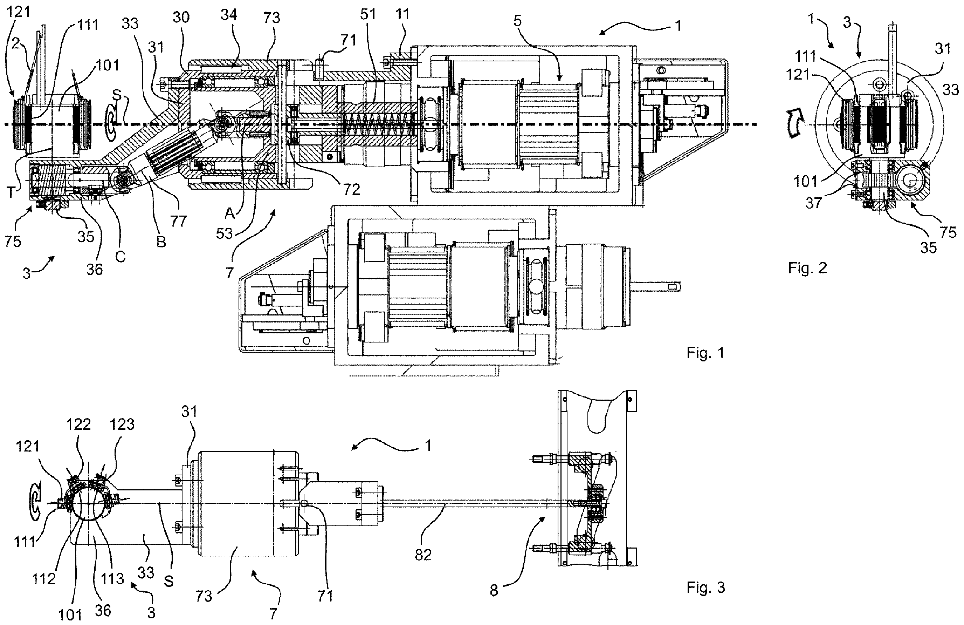

Die Figur 1 zeigt eine Wickelvorrichtung, die im Allgemeinen mit dem Bezugszeichen 1 bezeichnet ist. Die Wickelvorrichtung 1 gemäß der vorliegenden Offenbarung umfasst als wesentliche Bestandteile ein Wickelwerkzeug 3, eine Antriebseinrichtung 5 und eine Kupplungseinrichtung 7.

Die Wickelvorrichtung 1 ist dazu ausgelegt, eine Trageinheit 101 aufzunehmen und mit einem Draht 2 an der Trageinheit 101 gehaltene Wicklungsträger 111, 112, 113 zu umwickeln, um eine Wicklung zu bilden. Dazu wird an den mehreren Wicklungsträgern 111, 112, 113 sukzessive je eine Teilwicklung 121, 122, 123 gebildet. Die erste Teilwicklung 121 auf dem ersten Wicklungsträger 111 und die zweite Teilwicklung 122 auf dem zweiten Wicklungsträger 112 werden durch denselben Draht 2 gebildet. Es kann auch eine dritte Teilwicklung 123 auf einem dritten Wicklungsträger 113 sowie gegebenenfalls weitere Teilwicklungen auf weiteren Wicklungsträgern, ebenfalls aus demselben Draht 2, gebildet werden.

In der vorliegenden Offenbarung wird exemplarisch eine erste Teilwicklung 121 auf dem ersten Wicklungsträger 111 eine zweite Teilwicklung 121 auf dem zweiten Wicklungsträger 112 beschrieben, wobei dem Fachmann klar ist, dass die Wickelvorrichtung 1 und das damit durchgeführte Wickelverfahren gleichsam für dritte sowie gegebenenfalls weitere Teilwicklungen verwendbar ist.

Die Trageinheit 101 ist im Allgemeinen eine Trageinheit 101 mit einer Sternanordnung von Wicklungsträgern 111, 112, 113. Die Trageinheit 101 mit Wicklungsträgern 111, 112, 113 kann beispielsweise ein außen genuteter Kern eines Stators oder ein außen genuteter Kern eines Rotors sein. Alternativ kann die Trageinheit 101 mit Wicklungsträgern in Form von Polzähnen für eine Polkette ausgestattet sein.

Während des Verfahrens zum Fertigen einer Anordnung für eine elektrische Maschine wird die Trageinheit mit 101 mit den daran befestigten Wicklungsträgern 111, 112 und 113 kontinuierlich durch das Wickelwerkzeug 3 gehalten. Mittels des Wickelwerkzeug 3 wird die daran festgehaltene Trageinheit 101 zum Bilden einer Teilwicklung 121, 122 oder 123 um einen jeweiligen Wicklungsträger 111, 112 oder 113 um eine erste Drehachse, die zur einfacheren Veranschaulichung nachfolgend als Spindelachse S bezeichnet wird, gedreht.

Zum Bilden der Anordnung für eine elektrische Maschine wird zunächst der erste Wicklungsträger 111 in einer Wickelstellung gebracht. Zu diesem Zweck wird der jeweilige Wicklungsträger 111, 112 oder 113 korrespondierend, vorzugsweise parallel, zu der Spindelachse S ausgerichtet und sodann um die Spindelachse S gedreht, wie in den Figuren 1 und 3 angedeutet. Während beispielsweise der erste Wicklungsträger 111 parallel zu der Spindelachse S ausgerichtet ist und um die Spindelachse S mithilfe des Wickelwerkzeug 3 gedreht wird, wird der Draht 2 um den ersten Wicklungsträger 111 gewunden und dabei die erste Teilwicklung 121 gebildet, wie in den Figuren 1 - 3 durch Pfeile angedeutet.

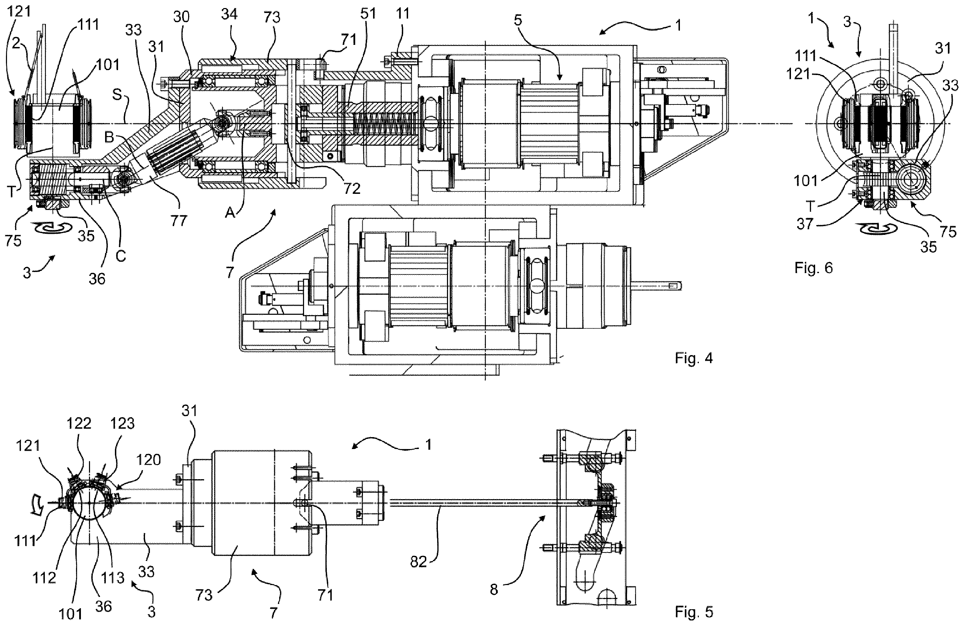

Wenn die Teilwicklung, also gemäß dem hiesigen Beispiel die erste Teilwicklung 121, rund um den jeweiligen Wicklungsträger (hier: der erste Wicklungsträger 111) fertiggestellt worden ist, wird die weiterhin fest mit dem Wickelwerkzeug 3 verbundene Trageinheit 101 mittels desselben Wickelwerkzeugs 3 um eine zweite Drehachse, die nachfolgend als Trommelachse T bezeichnet wird, gedreht, wie in den Figuren 4 - 6 durch Pfeile angedeutet. Durch die Drehung der Trageinheit 101 um die Trommelachse T wird der erste Wicklungsträger 111 aus seiner korrespondierend zur Spindelachse S ausgerichteten Wickelstellung hinaus bewegt. Anstelle des ersten Wicklungsträgers 111 wird sodann der zweite Wicklungsträger 112 korrespondierend zu der Spindelachse S ausgerichtet. Nun kann zum Bilden der zweiten Teilwicklung ein 122 um den zweiten Wicklungsträger 112 eine Drehung des zweiten Wicklungsträgers 112 um die Spindelachse S durchgeführt werden. Die Spindelachse S kann vorzugsweise kontinuierlich horizontal ausgerichtet sein. Während dem Wechseln der Ausrichtung der Wicklungsträger ist die Trommelachse T vorzugsweise vertikal ausgerichtet.

Bei der Wickelvorrichtung und dem Wickelverfahren gemäß der vorliegenden Offenbarung wird die Drehung der Trageinheit 101 um die Spindelachse S ebenso wie die Drehung der Trageinheit 101 um die Trommelachse T durch dieselbe Antriebseinrichtung 5 bewirkt, wobei eine Kupplungseinrichtung 7 vorgesehen ist, die bestimmt, ob die der Wickelträger 101 um die Spindelachse S oder um die Trommelachse T gedreht wird. Die Kupplungseinrichtung 7 kann wahlweise bewirken, dass eine drehende Antriebsbewegung von der Antriebseinrichtung 5 so auf das Wickelwerkzeug 3 übertragen wird, dass sie dieses sich in seiner Gesamtheit gemeinsam mit der Trageinheit 101 um die Spindelachse S gedreht oder so, dass nur ein Aufnahmenteil des Wickelwerkzeugs 3 mit der daran befestigten Trageinheit 101, das auch als Aufnahmeeinrichtung 35 bezeichnet sein kann, um die Trommelachse T gedreht wird.

Bei den anhand der beiliegenden Zeichnungen dargestellten bevorzugten Ausführung der Offenbarung befindet sich die Kupplungseinrichtung 7 in einem Zustand, welche in den Figuren 1 - 3 dargestellt ist, in einer ersten Stellung, die als Wickelstellung bezeichnet sein kann. In einem in den Figuren 4 - 6 gezeigten Zustand der Wickelvorrichtung 1 befindet sich die Kupplungseinrichtung 7 in einer zweiten Stellung, welche als Wechselstellung bezeichnet sein kann.

Bei der in die Figuren 1 - 6 gezeigten bevorzugten Ausführung einer Wickelvorrichtung 1 umfasst das Wickelwerkzeug 3 eine Basis 31, einen Ausleger 33 und eine an dem Ausleger 33 angeordnete Aufnahmeeinrichtung 35.

Die Basis 31 umgibt die Spindelachse S. Die Basis 31 umfasst einen Hülsenkörper 30. Der Hülsenkörper ist 30 ist vorzugsweise im Wesentlichen zylindrisch. Die Symmetrieachse des Hülsenkörpers 30 kann auf der Spindelachse S liegen. An der Außenseite des Hülsenkörpers 30 kann eine Nut-Feder-Verbindung 34, ein Zahnkranz, oder ähnliches, zum linearen Führen eines Verlagerungsbauteils 73, wie der hier abgebildeten Schiebehülse, vorgesehen sein. Die Schiebehülse ist Teil der Kupplungseinrichtung 7. Die Schiebehülse ist an der Außenseite der Basis 31 parallel zu der Spindelachse S translatorisch beweglich und drehfest an der Basis 31 festgelegt.

Die Kupplungseinrichtung 7 umfasst ferner einen an einem Gestell 11 der Wickelvorrichtung 1 festgelegten Stopper 71, der von der Schiebehülse 73 in dem in den die Figuren 1-3 dargestellten Zustand freigegeben ist. Wenn die Schiebehülse 73 nicht mit dem Stopper 71 in einem Kontakteingriff steht, kann sich die Schiebehülse 73 gemeinsam mit der Basis 31 relativ zu dem ortsfesten Gestell 11 drehen. Die Kupplungseinrichtung 7 befindet sich in einer ersten Stellung oder Wickelstellung so lange der Stopper 71 vom Verlagerungsbauteil 73 gelöst ist.

In den Figuren 4-6 ist eine zweite Stellung der Kupplungseinrichtung 7 abgebildet, in welcher das Verlagerungsbauteil 73 mit dem Stopper 71 in Kontakteingriff steht. Das Verlagerungsbauteil 73 ist in dieser zweiten Stellung oder Wechselstellung mit dem ortsfesten am Gestell 11 der Vorrichtung 1 drehfest verbunden. Die drehfeste Verbindung zwischen dem Verlagerungsbauteil 73 und der Basis 31 des Wickelwerkzeugs 3 besteht weiterhin, sodass in der Wechselstellung der Kupplungseinrichtung 7 die Basis 31 drehfest an dem ortsfesten Gestell 11 der Vorrichtung 1 festgelegt ist. In der Wechselstellung der Kupplungseinrichtung 7 ist die Basis 31 nicht drehbar um die Spindelachse S.

Der Ausleger 33 des Wickelwerkzeugs 3 ist drehfest mit der Basis 31 verbunden. Der Ausleger kann beispielsweise einstückig mit der Basis 31 gefertigt, daran stoffschlüssig gefügt, wie abgebildet festgeschraubt oder auf andere Weise drehfest mit dem Basis 31 verbunden sein. Der Ausleger hat eine sich in Richtung parallel zur Spindelachse S erstreckende Ausdehnung. Der Ausleger 33 setzt sich zinkenartig von der Basis 31 aus fort. Anders als die hier abgebildete, vorzugsweise im Wesentlichen konzentrisch zu der Spindelachse S angeordnete und/oder geformte Basis, ist der Ausleger 33 exzentrisch bezüglich der Spindelachse S angeordnet.

Der Ausleger 33 umfasst zumindest einen Sockelabschnitt 36, der vollständig versetzt relativ zu der Spindelachse S radial angeordnet ist. Der radiale Versatz zwischen der Spindelachse S und dem Sockelabschnitt 36 ist vorzugsweise auf die Trageinheit 101 und die daran befestigten Wicklungsträger 111, 112, 113 abgestimmt, vorzugsweise derart, dass der radiale Versatz der Spindelachse S und dem Sockelabschnitt 36 etwa der Hälfte der Breite der Trageinheit 101 und/oder der Wicklungsträger 111, 112, 113 entspricht. Der radiale Versatz zwischen dem Sockelabschnitt 36 des Ausleger 33 kann vorzugsweise derart auf den Wicklungsträger 111 abgestimmt sein, dass die Spindelachse S die Wicklungsträger 111, 112, 113 eine an dem Wickelwerkzeug 3 gehaltenen Trageinheit 101 mittig schneidet.

An dem radial zur Spindelachse S versetzten Ausleger 33 ist eine Aufnahmeeinrichtung 35 gehalten. Die Aufnahmeeinrichtung 35 ist mit der Basis 31 verbunden und um die Trommelachse T drehbar relativ zu der Basis 31. Zu drehbaren Lagerung der Aufnahmeeinrichtung 35 am Ausleger 33 kann beispielsweise ein Kugellager 37 oder anderes Drehlager in dem Sockelabschnitt 36 angeordnet sein, wie etwa in den Figuren 2 und 6 angedeutet.

Die zweite Drehachse T kann auch als Wechselachse oder Revolverachse bezeichnet sein. Indem der von der Aufnahmeeinrichtung 35 getragene Trageinheit 101 um die Wechselachse T rotiert wird, kann selektiv einer der daran fixierten Wicklungsträger 111, 112 oder 113 korrespondierend zu der Spindelachse S ausgerichtet werden.

Vorzugsweise ist der die Aufnahmeeinrichtung 35 stufenlos um die Trommelachse T drehbar. In dem die Aufnahmeeinrichtung 35 mittels einer vorzugsweise stufenlosen Drehung verschiedene Rotationsstellungen in Bezug auf das ortsfeste Gestell 11 und die Spindelachse S einnehmen kann, können unterschiedliche Wicklungsträger mittels derselben Aufnahmeeinrichtung 35 positioniert werden. Beispielsweise kann die Aufnahmeeinrichtung 35 für verschiedene Trageinheiten mit unterschiedlichen Anzahlen Wicklungsträgern verwendet werden, oder für verschiedene Trageinheiten, deren jeweils zu einander benachbarte Wicklungsträger unterschiedlichen Drehversatz relativ zueinander aufweisen. Die Anzahl der Wicklungsträger an der Trageinheit kann beispielsweise drei, vier, fünf, sieben oder eine andere Zahl betragen.

Die Aufnahmeeinrichtung 35 ist um die Trommelachse T drehbar. Die Aufnahmeeinrichtung 35 kann beispielsweise durch einen Dorn oder eine Welle gebildet sein, die oder der mit der Trageinheit 101 drehfest verbunden oder verbindbar ist. Die Aufnahmeeinrichtung 35 umfasst einen Rotationskörper, der um die Trommelachse T drehbar an dem Ausleger 33 festgelegt ist. Bei einer Drehung des Wickelwerkzeugs 3, d. h. der Basis 31 gemeinsam mit dem Ausleger 33, um die Spindelachse S, rotiert auch die Aufnahmeeinrichtung 35. In Bezug auf die Spindelachse S ist die Aufnahmeeinrichtung 35 einschließlich deren Rotationskörper bezüglich der Spindelachse S drehfest an dem Ausleger 33 festgelegt.

Die zweite Drehachse T ist quer zu der ersten Drehachse S ausgerichtet. Es kann bevorzugt sein, dass die zweite Drehachse D senkrecht zu der ersten Drehachse T ausgerichtet ist. Vorzugsweise schneidet die zweite Drehachse T die erste Drehachse S. Die zweite Drehachse T erstreckt sich vorzugsweise radial bezüglich der ersten Drehachse S. Von dem Ausleger 33 und dessen radial zu der Spindelachse S versetzten Sockelabschnitt 36 kann sich die Aufnahmeeinrichtung 35 radial nach innen erstrecken und die Spindelachse S schneiden. Zwischen dem Sockelabschnitt 36 und der Basis 31 streckt sich in der vorliegend abgebildeten Ausführung der Ausleger 33 abschnittsweise schräg, fort von der Spindelachse S radial nach außen.

Die Antriebseinrichtung 5 treibt eine Antriebswelle 51 der Wickelvorrichtung an, die koaxial zu der Spindelachse S angeordnet und geformt ist. Die Antriebswelle 51 kann als Hohlwelle ausgestaltet sein. Die Antriebswelle hat ein Abtriebsstück 53, dass innerhalb des Hülsenkörpers 30 angeordnet ist. Mithilfe des Abtriebsstücks 53 kann eine von der Antriebseinrichtung 5 bereitgestellte drehende Antriebsbewegung auf das Wickelwerkzeug 3 übertragen werden.

Die Kupplungseinrichtung 7 kann in der Wickelstellung eine drehfeste Verbindung zwischen der Basis 31 und dem Abtriebsstück 53 einrichten und in der Wechselstellung die drehfeste Verbindung zwischen dem Abtriebsstück 53 und der Basis 31 lösen.

Die Kupplungseinrichtung 7 kann ein Kolbenelement 72 umfassen, das mit einem beispielsweise pneumatischen Aktor 8 über eine Stellstange 82 verbunden ist. Die Stellstange 82 kann sich durch die Antriebseinrichtung 5 hindurch erstrecken und innerhalb der hohlen Antriebswelle 51 aufgenommen sein. Der Aktor 8 kann beispielsweise ein pneumatischer Aktor, insbesondere eine Indexschaltung, sein. Das Kolbenelement 72 ist in Axialrichtung der Spindelachse fest und bezüglich der Spindelachse S drehbar mit dem Verlagerungsbauteil 73 verbunden, um das Verlagerungsbauteil zwischen der Wickelstellung und der Wechselstellung hin und her zu bewegen. Der in dem Kolbenelement 72 fest verankerte, sich speichenartig radial zur Spindelachs S erstreckende Stift kann in einer Nut in dem Verlagerungsbauteil 73 rotieren.

Figur 4 zeigt das Verlagerungsbauteil einen 73 in der Wechselstellung, in welcher das Verlagerungsbauteil 73 die Basis 31 des Wickelwerkzeugs 3 mithilfe des Stoppers 71 ortsfest am Gestell 11 hält. Die drehende Antriebsbewegung der Antriebseinrichtung 5 wird in der Wechselstellung nicht auf die Basis 31 übertragen, sondern bewirkt stattdessen eine Drehung der Aufnahmeeinrichtung 35 mit der Trageinheit 101 um die Trommelachse T. Die Kupplungseinrichtung 7 verbindet in der Wechselstellung die Antriebseinrichtung 5 mit der Aufnahmeeinrichtung 35.

Zum Betätigen der Aufnahmeeinrichtung 35 umfasst die Kupplungseinrichtung 7 Übertragungsmittel 75 und 77, welche die drehende Antriebsbewegung von der Antriebseinrichtung 5 an die Aufnahmeeinrichtung 35 mitteilen. Die Übertragungsmittel 75, 77 sind bevorzugt im Inneren von Hohlräumen der Basis 31 und des Auslegers 33 untergebracht. Das Verlagerungsmittel 77 (hier exemplarisch als Kardanwelle dargestellt) ist zum Teil innerhalb der Basis 31 und teilweise innerhalb des Ausleger 33 untergebracht. Das als Schneckengetriebe illustrierte Umlenkmittel 75 ist vollständig innerhalb des Sockelabschnitts 36 des Auslegers 33 untergebracht.

Zur Übertragung der drehenden Antriebsbewegung des Spindelantriebs 5 an die um die Trommelachse T drehbare Aufnahmeeinrichtung 35 in dem radial zur Spindelachse S versetzten Sockelabschnitt 36 sind die Übertragungsmittel 75, 77 vorgesehen. Bei der abgebildeten exemplarischen Ausführung umfassen die Übertragungsmittel ein Verlagerungsmittel 77, das dazu eingerichtet ist, die drehende Antriebsbewegung fort von der ersten Drehachse S zu verlagern, insbesondere von einer koaxial zur ersten Drehachse S ausgerichteten Antriebsachse A zu einer, insbesondere parallel, radial zur Spindelachse S versetzten Abtriebsachse C. Das Verlagerungsmittel 77 kann beispielsweise, wie abgebildet, als eine Kardanwelle mit Kugelumlauf realisiert sein, bei der eine schräge Zwischenachse B den Radialversatz zwischen der Abtriebsachse C und der Antriebsachse A überbrückt.

Zusätzlich oder alternativ können die Übertragungsmittel ein Umlenkmittel 75 umfassen. Das Umlenkmittel 75 kann dazu ausgelegt und eingerichtet sein, die drehende Antriebsbewegung von einer Rotation um die Spindelachse S oder eine parallel zu der Spindelachse S versetzten drehenden Antriebsbewegung um eine Abtriebsachse C in eine Drehbewegung quer, insbesondere senkrecht, zu der Spindelachse S um die Trommelachse T um zu lenken. Das Umlenkmittel 75 kann wie abgebildet als Schneckengetriebe realisiert sein oder alternativ als ein anderes Getriebe, beispielsweise ein schrägverzahntes Zahnradgetriebe, oder auf andere Weise. Vorzugsweise ist das Umlenkmittel 75 selbsthemmend, damit während des Wickelbetriebs beim Rotieren der an der Aufnahmeeinrichtung 35 gehaltenen Trageinheit 101 um die Spindelachse S Ausweichbewegungen der Aufnahmeeinrichtung 35 um die Trommelachse T verhindert werden.

Zum Drehen der Aufnahmeeinrichtung 35 gemeinsam mit der Trageinheit 101 um die Trommelachse T wird die Drehbewegung von dem Abtriebsstück 53 an das Verlagerungsmittel 77 übertragen. Das Verlagerungsmittel 77 gibt die drehende Antriebsbewegung weiter an das Umlenkmittel 75. Das Umlenkmittel 75 treibt den Rotationskörper der Aufnahmeeinrichtung 35 und dadurch auch die Trageinheit 101 an. Mithilfe der Drehung der Aufnahmeeinrichtung 35 um die Trommelachse T kann die Trageinheit 101 von einer ersten Ausrichtung, in welcher der erste Wicklungsträger 111 korrespondierend zu Spindelachse S ausgerichtet ist, in eine zweite Orientierung gebracht werden, damit der zweite Wicklungsträger 112 korrespondierend zu der Spindelachse S ausgerichtet wird. Indem die Aufnahmeeinrichtung 35 weitergedreht wird, kann der jeweils nächste Wicklungsträger 113, etc., in eine korrespondierend zu der Spindelachse S ausgerichtete Wickelposition gebracht werden.

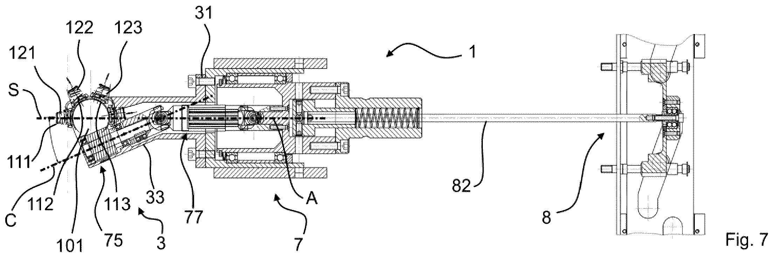

Figur 7 zeigt eine alternative Ausgestaltung einer Wickelvorrichtung 1, die im Wesentlichen mit der oben beschriebenen übereinstimmt und optional mit diesen kombinierbar ist, sodass zur Vermeidung von Wiederholungen auf die vorigen Ausführungen insbesondere zu den Figuren 1 und 4 verwiesen wird. Demgegenüber unterscheidet sich die in Fig. 7 abgebildete Wickelvorrichtung 1 im Wesentlichen nur dadurch, dass die Abtriebsachse C mit einer Neigung relativ zu der Spindelachse S ausgerichtet ist. Die Abtriebsachse C ist auch schräg zu der Antriebsachse A ausgerichtet. Durch diese Ausrichtung der Abtriebsachse C ist der Wickelraum besonders einfach zugänglich.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Wickelvorrichtung (1) zum Herstellen einer Anordnung für eine elektrische Maschine mit mehreren Wicklungsträgern (111, 112, 113) und einer hierauf angeordneten Wicklung aus Drahtmaterial, wobei den mehreren Wicklungsträgern (111, 112, 113) eine jeweilige Teilwicklung (121, 122, 123) zugeordnet ist, aufweisend
- ein Wickelwerkzeug (3) mit
- einer Basis (31), die um eine erste Drehachse (S) drehbar ist,
- einer Aufnahmeeinrichtung (35), welche eingerichtet ist, eine Trageinheit (101) mit den mehreren Wicklungsträgern (111, 112, 113) zu halten; und
- einem zu der ersten Drehachse (S) radial versetzten Ausleger (33), der mit der Basis (31) verbunden ist und an dem die Aufnahmeeinrichtung (35) um eine zweite Drehachse (T) drehbar gelagert ist,
- wobei die zweite Drehachse (T) quer zu der ersten Drehachse (S) ausgerichtet ist,
- eine dem Wickelwerkzeug (3) zugeordnete Antriebseinrichtung (5), welche eingerichtet ist, eine drehende Antriebsbewegung bereitzustellen; sowie ferner aufweisend
- eine Kupplungseinrichtung (7) zum Übertragen der drehenden Antriebsbewegung von der Antriebseinrichtung (5) an das Wickelwerkzeug (3) zum Rotieren der Aufnahmeeinrichtung um die erste Drehachse (S) oder die zweite Drehachse (T).

2. Wickelvorrichtung (1) nach Anspruch 1, **dadurch gekennzeichnet, dass** die Kupplungseinrichtung (7) dazu ausgelegt ist, eine erste Stellung zum Übertragen der drehenden Antriebsbewegung von der Antriebseinrichtung (5) an das Wickelwerkzeug (3) zum Rotieren der Aufnahmeeinrichtung um die erste Drehachse (S) oder eine zweite Stellung zum Übertragen der drehenden Antriebsbewegung von der Antriebseinrichtung (5) an das Wickelwerkzeug (3) zum Rotieren der Aufnahmeeinrichtung um die zweite Drehachse (T) einzunehmen.

3. Wickelvorrichtung (1) nach Anspruch 2, **dadurch gekennzeichnet, dass** die Kupplungseinrichtung (7) ein bewegliches Verlagerungsbauteil (73) umfasst, wobei das Verlagerungsbauteil (73) die Basis (31) in der ersten Stellung drehfest mit der Antriebseinrichtung (5) verbindet, und in der zweiten Stellung das Verlagerungsbauteil (73) die Basis (31) ortsfest an einem Stopper (71) hält.

4. Wickelvorrichtung (1) nach Anspruch 2 oder 3, **dadurch gekennzeichnet, dass** die Kupplungseinrichtung (7) ein Übertragungsmittel (75, 77) zum Übermitteln der drehenden Antriebsbewegung von der Antriebseinrichtung (5) an die Aufnahmeeinrichtung (35) in der zweiten Stellung umfasst.

5. Wickelvorrichtung (1) nach Anspruch 4, **dadurch gekennzeichnet, dass** die Übertragungsmittel (75, 77)
- in der Basis (31) und dem Ausleger (33) untergebracht sind,
- ein Verlagerungsmittel (77) zum Verlagern der drehenden Antriebsbewegung fort von der ersten Drehachse (S) aufweisen, und/oder
- ein Umlenkmittel (75) zum Umlenken der drehenden Antriebsbewegung um einen Umlenkwinkel aufweisen.

6. Wickelvorrichtung (1) nach einem der Ansprüche 2 bis 5, **dadurch gekennzeichnet, dass** die Wickelvorrichtung (1) ferner einen Aktor (8) umfasst, der dazu ausgelegt ist, die Kupplungseinrichtung (7) zu betätigen.

7. Wickelvorrichtung (1) nach einem der vorstehenden Ansprüche, **dadurch gekennzeichnet, dass** die Aufnahmeeinrichtung (35) gemeinsam mit der Trageinheit (101) mit einem vorbestimmten, korrespondierend zu der ersten Drehachse ausgerichteten Wicklungsträger (111, 112, 113), um die erste Drehachse (S) drehbar ist.

8. Wickelvorrichtung (1) nach einem der vorstehenden Ansprüche, dadurch **gekenn-zeichnet**, dass das die Trageinheit (101) an der Aufnahmeeinrichtung (35) um die zweite Drehachse (T) drehbar ist, um einen beliebigen der Wicklungsträger (111, 112, 113) korrespondierend zu der ersten Drehachse (S) auszurichten.

9. Wickelvorrichtung (1) nach einem der vorstehenden Ansprüche, **dadurch gekennzeichnet, dass** die Trageinheit (101) ausgewählt ist aus der folgenden Gruppe: außen genuteter Kern eines Stators, außen genuteter Kern eines Rotors, Trageinheit mit Polzähnen einer Polkette und Trageinheit mit einer Sternanordnung von Wicklungsträgern (111, 112, 113).

10. Verfahren zum Herstellen einer Anordnung für eine elektrische Maschine mit mehreren Wicklungsträgern (111, 112, 113) und einer hierauf angeordneten Wicklung aus Drahtmaterial, wobei den mehreren Wicklungsträgern (111, 112, 113) eine jeweilige Teilwicklung (121, 122, 123) zugeordnet ist, mit
- Bereitstellen einer Wickelvorrichtung (1) mit einem Wickelwerkzeug (3), welches eingerichtet ist, eine Trageinheit (101) aufzunehmen, und einer dem Wickelwerkzeug (3) zugeordneten Antriebseinrichtung (3), welche eingerichtet ist, eine drehende Antriebsbewegung bereitzustellen;
- Anordnen einer Trageinheit (101) mit mehreren Wicklungsträgern (111, 112, 113) an dem Wickelwerkzeug (3);
- Anordnen eines ersten Wicklungsträgers (111) in einer Wickelstellung korrespondierend zu einer ersten Drehachse (S);
- Rotieren der an dem Wickelwerkzeug (3) gehaltenen Trageinheit (101), angetrieben durch die drehende Antriebsbewegung, um die erste Drehachse (S) zum Herstellen einer ersten Teilwicklung (121) auf dem ersten Wicklungsträger (111),
- Rotieren der an dem Wickelwerkzeug (3) gehaltenen Trageinheit (101), angetrieben durch die drehende Antriebsbewegung, um eine zweite Drehachse (T), um anstelle der ersten Trageinheit (111) einen zweiten Wicklungsträger (112) in einer Wickelstellung korrespondierend zu der ersten Drehachse (S) anzuordnen,
- Rotieren der an dem Wickelwerkzeug (3) gehaltenen Trageinheit (101), angetrieben durch die drehende Antriebsbewegung, um die erste Drehachse (S) zum Herstellen einer zweiten Teilwicklung (122) auf dem zweiten Wicklungsträger (112), und
- Lösen der Trageinheit (101) von dem Wickelwerkzeug (3).

11. Verfahren nach Anspruch 10, **gekennzeichnet, durch**,
- Rotieren der an dem Wickelwerkzeug (3) gehaltenen Trageinheit (101), angetrieben **durch** die drehende Antriebsbewegung, um eine zweite Drehachse (T), um anstelle des zweiten Wicklungsträgers (112) einen dritten Wicklungsträger (113) in einer Wickelstellung korrespondierend zu der ersten Drehachse (S) anzuordnen,
- Rotieren der an dem Wickelwerkzeug (3) gehaltenen Trageinheit (101), angetrieben **durch** die drehende Antriebsbewegung, um die erste Drehachse (S) zum Herstellen einer dritten Teilwicklung (123) auf dem dritten Wicklungsträger (113), vor dem Lösen des Trageinheit (101) von dem Wickelwerkzeug (3).

12. Verfahren nach Anspruch 10 oder 11, **dadurch gekennzeichnet, dass** zum Rotieren der Trageinheit (101) um die erst Drehachse (S) eine erste drehfeste Verbindung zwischen dem Wickelwerkzeug und der Antriebseinrichtung ausgebildet wird und dass zum Rotieren der Trageinheit (101) um die zweite Drehachse (S) eine zweite drehfeste Verbindung zwischen dem Wickelwerkzeug und der Antriebseinrichtung ausgebildet wird.

13. Verfahren nach Anspruch 12, **dadurch gekennzeichnet, dass** eine Kupplungseinrichtung zum Ausbilden der ersten oder zweiten drehfesten Verbindung verwendet wird.

14. Verfahren nach Anspruch 13, **dadurch gekennzeichnet, dass** zum Ausbilden und zum Lösen der ersten drehfesten Verbindung ein bewegliches Verlagerungsbauteil (73) betätigt wird.

15. Verfahren nach Anspruch 14, **dadurch gekennzeichnet, dass** die Kupplungseinrichtung dazu ausgelegt ist, die drehende Antriebsbewegung zum Rotieren der Trageinheit um die zweite Drehachse (T) fort von der ersten Drehachse (S) zu verlagern und/oder quer, insbesondere senkrecht, zu der ersten Drehachse (S) umzulenken.

16. Verfahren nach mindestens einem der Ansprüche 10 bis 15, **dadurch gekennzeichnet, dass** als Trageinheit (101) ein Trageinheit aus der folgenden Gruppe an dem Wickelwerkzeug angeordnet wird: außen genuteter Kern eines Stators, außen genuteter Kern eines Rotors, Trageinheit mit Polzähnen einer Polkette und Trageinheit (101) mit einer Sternanordnung von Wicklungsträgern (111, 112, 113).
